# EUROPEAN PATENT SPECIFICATION

(11) **EP 4 553 616 B1**
(45) Date of publication and mention of the grant of the patent: **04.03.2026**
(21) Application number: 23208772.6
(22) Date of filing: 09.11.2023
(51) Int. Cl.: G06F 3/01, G06F 3/0481, G06N 20/00, G06F 3/16, G06N 3/08, G09B 21/00, G06V 10/44, G06V 10/50, G06V 10/82

(54) **HAPTIC FEEDBACK USING MACHINE-LEARNING**
HAPTISCHE RÜCKMELDUNG UNTER VERWENDUNG VON MASCHINENLERNEN
RÉTROACTION HAPTIQUE UTILISANT UN APPRENTISSAGE AUTOMATIQUE

(43) Date of publication of application: 14.05.2025
(73) Proprietor: Aito BV, 1043 EJ Amsterdam (NL)
(72) Inventor: La Croce, Davide, Vantaa (FI)
(74) Representative: Papula Oy

(56) References cited:
- US-A1- 2020 264 772
- US-A1- 2021 090 410
- US-A1- 2021 117 003

## Description

### TECHNICAL FIELD

This disclosure relates to haptic feedback. In particular, this disclosure relates to a method and a device for providing a haptic feedback response for a graphical user interface using machine-learning models.

### BACKGROUND

Haptic feedback is implemented on a multitude of modern computing devices such as laptops, tablets and mobile phones. The purpose of haptic feedback is to provide a physical stimuli response to a user of a device, whenever pressing on an object displayed on a screen for example. Some other types of haptic feedback may include for example, vibrations on a game controller.

In some cases, the haptic feedback may be provided by the software itself, if such is desired.

In case of a user interface, the haptic feedback is traditionally configured by providing a software application programming interface, API, to the designers of the UI. The designers (e.g., front-end developers) may then use API to configure the device to provide different types of haptic feedback for different types of graphical elements in the UI. For example, the haptic feedback may be configured to emulate properties of different materials such as rugosity or sharpness of a rock presented in the UI.

The problem arises when the API may require different iterations and require the help of the developers of the haptic feedback API to optimize the end-product, as the UI designers may not have any expertise in configuring the haptics. Therefore, a faster and a more rigorous method involves the automation of this process.

US20210117003A1 presents a computing platform to provide information to a user, more specifically, a sight impaired user, via either audio or haptic feedback. It uses neural network accelerator to determine at least a portion of the feedback. US20200264772A1 discloses at least a method for determining haptic feedback based on an image of a user interface. US20210090410A1 uses machine-learning to determine content in a user interface.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The scope of protection sought for various embodiments of the present disclosure is set out by the independent claims.

According to a first aspect, there is provided a method as defined by the independent claim 1. According to a second aspect, there is provided a device as defined by the independent claim 9. Preferred embodiments are defined by the dependent claims.

In an implementation form of the first and/or the second aspect, the at least one machine-learning model may be a holistically nested edge detector, HED.

In an implementation form of the first and/or the second aspect, the at least one machine-learning model may be alternatively: a histogram of oriented gradients (HOG), a region-based convolutional neural network, R-CNN, a region-based fully convolutional neural network, R-FCN, a single-shot detector, SSD, a spatial pyramid pooler (SPP-net) and a You Only Look Once, YOLO.

### BRIEF DESCRIPTION OF THE DRAWINGS

The accompanying drawings, which are included to provide a further understanding of the charging apparatus and constitute a part of this specification, illustrate examples and together with the description help to explain the principles of the charging apparatus. In the drawings:
FIG. 1 illustrates a general computing device and a graphical user interface related to an example embodiment.
FIG. 2A illustrates a method 200 according to an example embodiment.
FIG. 2B illustrates a method 200 according to an example embodiment.
**FIG.** 3A illustrates a screen 300 and a plurality of haptic feedback devices 302 related to an example embodiment. The screen displays a bounding region of duck 304, a clicking position 306 and activated haptic feedback devices corresponding to the bounding region.
FIG. 3B illustrates a screen 300 and a plurality of haptic feedback devices 302 related to an example embodiment. The screen displays a bounding region of water 310. A clicking of the screen 300 activates a plurality of haptic devices in different timesteps t₀₋₂.
FIG. 4 illustrates a digital audio mixer user interface 400 related to an example embodiment configured to haptic feedback based on recognized areas.
FIG. 5 illustrates a portion of a snapshot of an operating system user interface related to an example embodiment.
FIG. 6 illustrates a snapshot of a landscape view with three different detected objects/areas related to an example embodiment.
FIG. 7 illustrates a device 700 according to an example embodiment.

Like reference numerals are used to designate like parts in the accompanying drawings.

### DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The description sets forth functions of the example and sequence of steps for constructing and operating the example. However, the same or equivalent functions and sequences may be accomplished by different examples.

The invention relates to utilizing machine-learning models such as visual object detection and sound classifier models/methods, to configure a haptic feedback based on the classification of different objects in a user interface, UI, of for example, an application or an operating system. The disclosure aims to match the haptic feedback with different elements on the user interface providing an optimal haptic configuration and effects based on individual objects of the UI.

Machine-learning models, more specifically deep learning neural networks, have been widely utilized in object detection, and more advanced models are being developed, such as convolutional neural networks, CNN's. CNN's are widely used in visual object detection and sound classification.

In some embodiments, referring to haptic feedback may also relate to additionally providing a visual feedback, such as providing a pattern on a set of light-emitting diodes, LED's.

Moreover, the disclosure relates to a method and a device for providing such a machine-learning based- haptic feedback.

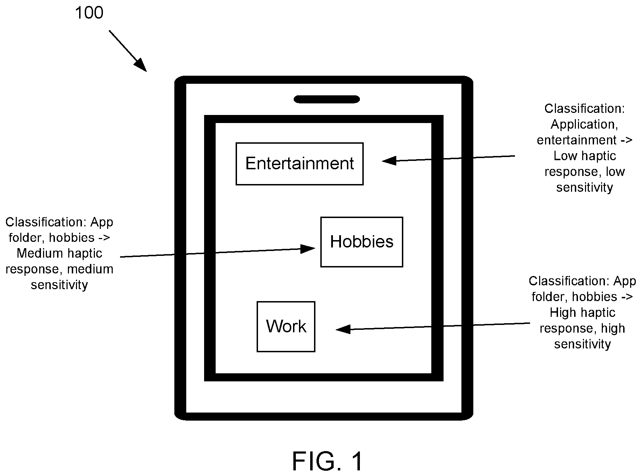

FIG. 1 illustrates a general mobile device 100 and a static picture of a user interface with different applications. The mobile device 100 comprises a haptic feedback circuit that may be configured via an application programming interface, API. In the example embodiment of FIG. 1, the haptic feedback circuit is configured to prioritize the haptic feedback response of work applications and provide a lower haptic response for entertainment applications (e.g., provide a high sensitivity, high power signal when pressing the example 'work' applications folder). A sensing and haptic configuration may comprise for example, the power of the haptic feedback signal (strength), the sensitivity of the pressing action, or the shape of the haptic feedback signal itself **e.g.,** how "sharp" or "soft" the haptic feedback may feel to the user. "Sharpness" vs "softness" may refer to for example, by how quickly a signal edge may change. I.e., a soft signal may be a 100 Hz sine wave, and a sharp signal may be a 100 Hz saw or square wave with faster transition edges. The configuration parameters (strength, sharp/soft and sensitivity) are generally known to a person skilled-in-the art. The values of these configuration parameters may be for example, an 8-bit value between 0 and 255.

The example embodiment of FIG. 1 is achieved by utilizing machine-learning models, such as using a visual object detection model. The chosen machine-learning model/method provides a classification of different objects and their localization data (such as bounding boxes, polygons or segmentations) in the UI for the system. A visual object detection method may also provide different properties of the detected objects such as color, color gradients, edges or the like.

In some embodiments, the machine-learning model may be for sound detection classification. For example, pressing a gun on a UI view provides a "gunshot" -like haptic feedback. Alternatively, a warning sound may be provided if a user clicks on a "no-go zone" on a UI. A sensing and haptic configuration may be different for each category/classification. The data on different sensing and haptic configurations may be on a database, for example a cloud service portal, or alternatively, stored on the hard-drive of the end-user device directly.

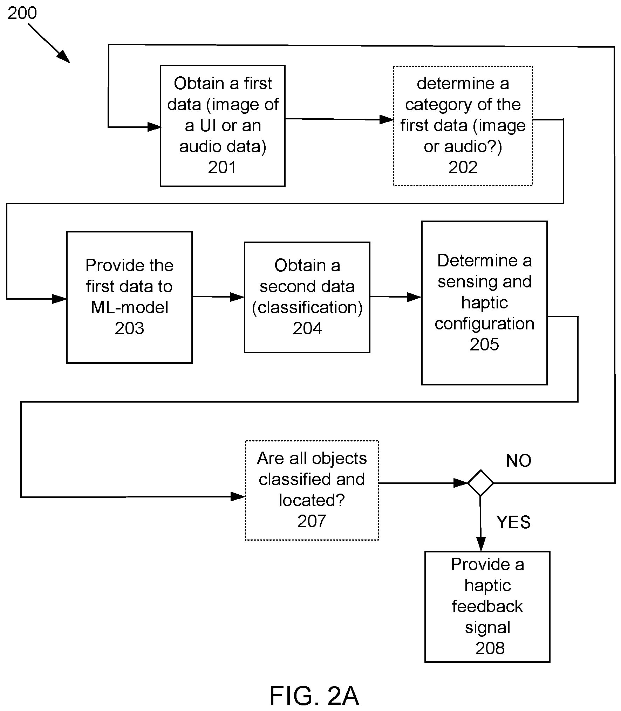

FIG. 2A illustrates an example embodiment of a method 200 disclosed herein for determining a sensing and haptic feedback configuration of a UI using machine-learning. The method 200 may be implemented on a general-purpose computing device comprising a haptic feedback circuit, or it may be implemented, for example, on an application-specific device optimized for haptic feedback.

At first, at 201, the method 200 comprises obtaining a first data. The first data may comprise for example a portion of a snapshot of the UI or alternatively, a snapshot of the full UI. In some embodiments, the first data may comprise an audio data, for example a warning sound.

Secondly, at 202, the method 200 may comprise determining a category of the first data. For example, in some embodiments, the first data may be alternatively an image data and an audio data, therefore a category check must be executed. However, the method 200 may be configured only for one, depending what kind of UI it is executed on.

Thirdly, at 203, the method 200 comprises providing the first data to at least one machine-learning model. The machine-learning model may comprise for example the mentioned visual object detection models (deep neural networks, CNN's) or deep neural networks for audio classification.

In some embodiments, a plurality of machine-learning models may be used. For example, if the UI needs audio data and image data classification simultaneously.

At fourth, at 204, the method 200 comprises: based on the providing the first data to the at-least one machine-learning model, obtaining at least one classification of at least one object.

In some embodiments of the method 200, the second data may further comprise localization data such as, for example, a bounding box of the at least one object, which is minimally defined as two points having some differential x and y values. Or the localization data may comprise at least one polygon of the at least one object, or a segmentation data of the at least one object, depending on what type of visual object detection model is used. The segmentation data may comprise for example, semantic segmentation data (e.g., labelling every pixel in the image and knowing which class it belongs etc.). Alternatively, the segmentation data may comprise instance segmentation data (e.g., show different instances of the same class by assigning an instance ID to instances of a class and produce an image where objects are separated by pixel boundaries). Instance segmentation may be performed by, for example, using a R-CNN convolutional neural network.

At fifth, at 205, the method 200 comprises: the operation of determining a sensing and haptic configuration based on the classification of the at least one object.

And finally, at 208, the method 200 comprises: based on the sensing and haptic configuration, providing a haptic feedback. The haptic feedback may comprise, a signal such as a sinewave or a pre-determined shape of haptic feedback signal stored in a buffer. In some embodiments, the haptic feedback may comprise providing visual haptic feedback to a plurality of LED's. In some embodiments, the haptic feedback may comprise a audio signal. Generally, it could be understood, that the haptic feedback is provided to a haptic feedback device such as a piezoelectric haptic feedback device, that converts electrical energy to physical vibrations.

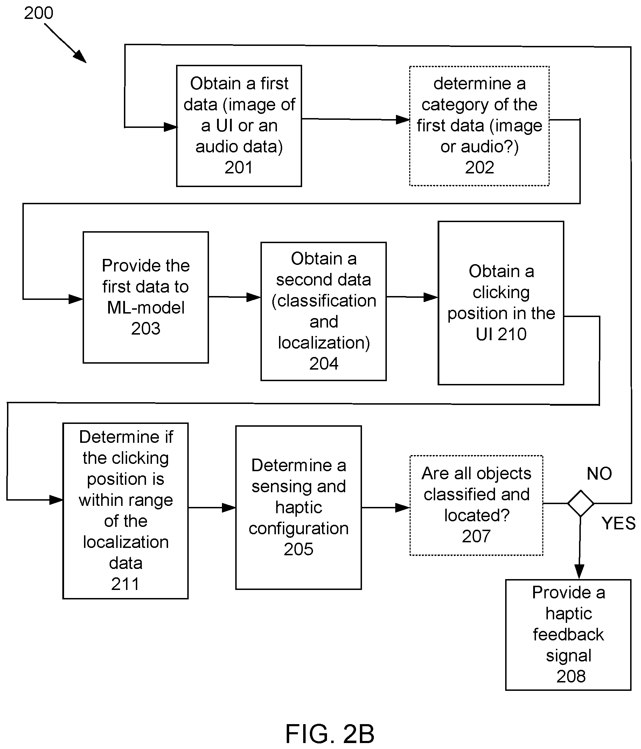

FIG. 2B illustrates an example embodiment of the method 200 with further modifications in accordance with the invention, when the first data is for example, an image of a UI, a portion of a snapshot of a UI, a full image of a UI etc.

Now at 204, the second data further comprises both the classification and a localization data of at least one object.

At 210, the method 200 further comprises obtaining a clicking position in the UI. For example, a user of a tablet pressing a location in the screen of the tablet (for example, a point in x and y coordinate).

At 211, the method 200 further comprises determining, if the clicking position in the UI is within range of the localization data of the at least one object. The term 'within range' may comprise area/region verification checks for the localization data, for example, if the localization data comprises a bounding box, the clicking position may be checked with a spatial access method such as R-tree. Furthermore, if the image of a UI comprises a portion of a snapshot of the UI, then normalization of the clicking position data may be performed to fit the coordinate system of the portion of the snapshot (e.g., if the clicking position range is from a 800x600 image and the image of a UI is a 200x200 portion of the image, either the clicking position of the bounding box must be translated to the correct coordinate system).

It is known to a person skilled in the art, that the object classification may always return a percentage value, which indicates the confidence level of the classification of the machine-learning model. Therefore, the method 200 may comprise a threshold level verification for the confidence level. E.g., if the at least one visual object detection model returns a confidence level value of less than 90%, the method 200 is not performed further.

In some embodiments, when using more than one machine-learning models (for example one to classify shape and one for colour), the confidence level check may be executed by, for example checking the average value of the confidence level provided by the more than one machine-learning models. For example, if the shape classifier returns 96% on a square, and the colour classifier returns 85% on a red colour, the total average is 90.5% which would exceed the threshold of 90% of the previous example.

The localization data may comprise at least two points in an image/snapshot of a UI. For example, two points with differential x and y values creates a rectangle.

The localization data may comprise a segmentation data provided by, for example, a CNN.

The localization data may comprise at least one polygon of at least one object.

The method 200 may be implemented on, for example, a general-purpose computing device comprising a haptic feedback driver/module and a screen. Or it may be implemented on a separate application-specific haptic feedback device comprising a module handling the computations and an application programming interface, API, for configuring the haptic signal for different categories or the like. Furthermore, the device may comprise a haptic module, which is responsible for converting the electrical signal to physical vibrations.

If the first data comprises a snapshot/image of a UI (or a portion of a snapshot), the first data may be captured at, for example, right after a press/click or it may be captured at, for example, after a UI view change has been detected. For most embodiments of the disclosure, the former is most likely used.

In some embodiments of the method 200, the method 200 may comprise a verification if all the objects in a snapshot have been classified and localized (FIG. 2A at 207). For example, if the first data comprises a portion of a snapshot of the UI, then the method 200 may be performed on multiple portions of the snapshot (full image). Therefore, the method 200 may be 'repeated'.

In some embodiments of the method 200, the operation of determining of a sensing and haptic configuration (FIG. 2A/B at 205) may be executed after the verification if all the objects in a snapshot have been classified and localized (FIG. 2A/B at 207), as these steps of the method 200 are interchangeable.

In some embodiments of the method 200, wherein if the first data is known to be a full image of a snapshot (no cropping), the verification if all objects have been classified and located (207 at FIG.'s 2A and 2B) may not be required.

The different classes for the classification of the objects may be, for example, a slider thumb, a slider track, button, knob, or various such categories of UI elements.

In some embodiments the classes for the classification may be, for example, a rock, a sky, a beach, if the UI of the software has such natural elements.

In some embodiments, the classes for the classification may be different musical instruments, for example, an acoustic guitar, a piano, a snare drum, a trumpet etc.

In some embodiments of the method 200, if the at least one machine-learning model comprises a visual object detection model, the visual object detection model may be a simple shape classifier model, a colour classifier model or a cascade classifier, depending on the features of the UI itself. For more complex UI's and haptic configurations, the at least one visual object detection model may be a deep neural network, for example a convolutional neural network model such as a R-CNN or a You Only Look Once, YOLO, -model.

In some embodiments of the disclosure, the at least one machine-learning model may be an audio classifier.

In some embodiments of the method 200, when the at least one machine-learning models is a visual object detection model, the visual object detection model may be shape segmentation model.

The at least one visual object detection model may be expanded to more than one visual object detection models, if the computational power allows such and/or the UI requires multiple features to be extracted. For example, a shape classifier and a colour classifier may be used in conjunction.

In some embodiments of the disclosure, required computational power may be reduced by transforming the first data. For example, if the first data is an image of a UI, the first data may be transformed to black and white/grayscale.

In some embodiments of the disclosure, the method 200 further comprises augmenting the first data. Augmenting the first data comprises for example, passing the first data to a neural network that will add information to the first data, then providing the augmented first data to a classifier model. E.g., the method 200 comprises using two or more machine-learning models. One example of this embodiment may be, for example, if the UI comprises out-of-focus objects photographed with a (poor) camera that requires using the augmenting neural network.

In some embodiments of the disclosure, a neural network may be required to determine, if the first data (image of a UI/snapshot etc.) is of too low-quality to determine the localization and classification. If this is true, then the first data may be provided to the neural network configured for image augmentation.

In an example embodiment of the method 200, the providing the haptic feedback is further based on the clicking position in the UI. In other words, the haptic feedback may be provided to the nearest haptic feedback device to the clicking position in the UI. For example, if for every 2x2 pixel region in the screen, there is one piezoelectric haptic feedback device and the position in the UI (clicking position) corresponds to some 2x2 pixel region, the output haptic signal can be provided to corresponding piezoelectric haptic device.

In an example embodiment of the method 200, the providing the haptic feedback is further based on the localization data. E.g., the haptic feedback can be provided to one or more haptic feedback devices (such as the previously mentioned piezoelectric) that corresponds to the bounding region of a classified object. For example, if the classified object is a rectangle, the output haptic signal may be provided to the middle of the rectangle, or to the sides of the rectangle, or to the whole rectangle, depending on the configuration.

In an example embodiment of the method 200, the haptic feedback is provided to a plurality of haptic feedback devices. The plurality of haptic feedback devices may comprise a piezoelectric matrix configured for a specific screen with a specific number of pixels etc.

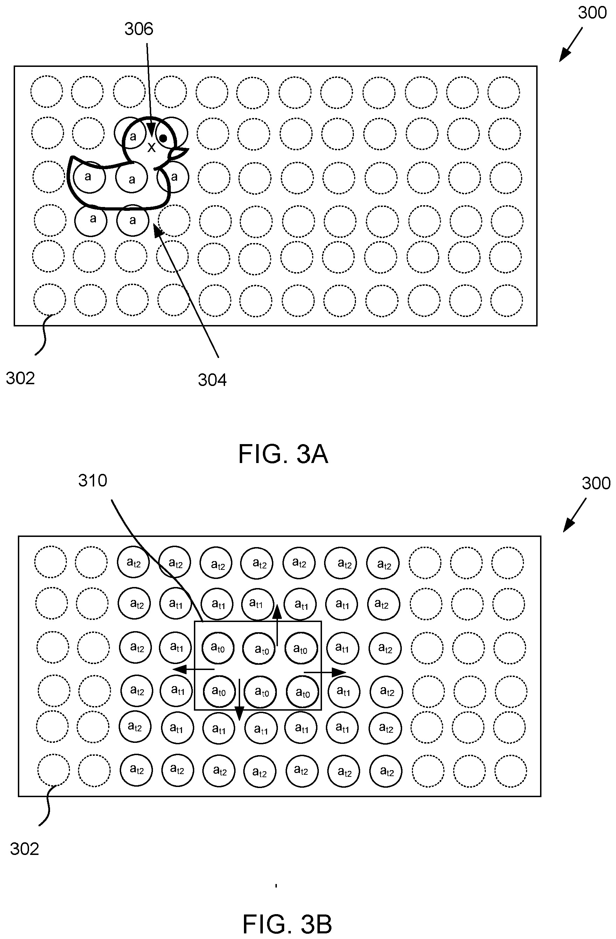

FIG. 3 illustrates an example of the above-described embodiment. A screen 300 and a plurality of haptic feedback devices 302 configured in a 6x12 matrix are illustrated. The method 200 has classified an object 304 in the screen (a duck). The screen 300 registers a clicking position 306 (the position in the UI) notated by the letter 'x'. The method 200 enables to configure the output haptic signal such, that each haptic feedback device 302, that overlaps the bounding region of the classified object 304, is provided an output haptic signal (notated by the letter 'a' and continuous outline of the circle).

When the at least one machine-learning model is a visual object detection model, the visual object detection model may be alternatively: a histogram of oriented gradients (HOG), a region-based convolutional neural network, R-CNN, a region-based fully convolutional neural network, R-FCN, a single-shot detector, SSD, a spatial pyramid pooler (SPP-net) and a You Only Look Once, YOLO.

In some embodiments of the method 200, the method 200 enables to configure the haptic feedback outside the bounding region, for example, if a user presses a location where 'water' has been classified, the output haptic signal may be slowly advanced to haptic feedback devices outside the bounding region of 'the water' in some timeframe. This example simulates 'wavelike behaviour'. FIG. 3B illustrates an example of this embodiment. In FIG. 3, the screen 300 displays a bounding region 310 of water that encloses a 2x3 haptic feedback devices 302. The haptic feedback devices 302 inside the bounding region are activated at timestep *t0* (noted by 'aₜ₀'). Then the adjacent haptic feedback devices 302 to the bounding region 310 are activated at timestep t1 (noted by 'aₜ₁') and finally the adjacent haptic devices 302 to the ones at timestep t1 are activated (noted by 'aₜ₂' ) .

An example embodiment of the method 200 further comprises: obtaining at least one colour value based on providing the first data to the at least one machine-learning model and the operation of determining a sensing and haptic configuration is at least partially based on the at least one colour value. The colour value may comprise, for example, a RGB value, a CMYK value, a PMS value or a HEX value.

Furthermore, the at least one colour value of the previous example may comprise, for example, colour gradient information. The colour gradient information may comprise, for example, a colour gradient matrix, which may comprise for example, colour information on the classified at least one object (e.g., colour information on each pixel of the classified object). Then, the operation of determining of a sensing and haptic configuration is based on the colour gradient information. For example, the intensity/strength of the output haptic signal changes based on the gradient. For example, more hot colours on the colour scale provide a higher strength haptic output signal than more cold colours.

In accordance with the invention, an example embodiment of the method 200 further comprises: when the second data comprises more than one localization data of more than one objects, further determining if the clicking position in the UI is within range of a localization data of at least one object from the second data, and secondly, determine if the clicking position in the UI is not within range of a localization data of another object in the second data. For example, if a UI has multiple objects in vicinity, a user may press a location in the screen that crosses the bounding box (or polygon(s)) of more than one objects, therefore the method 200 may be alternatively not be executed fully, or it may be further configured to provide a specifically configured separate haptic feedback signal, when a location crossing multiple bounding boxes has been pressed.

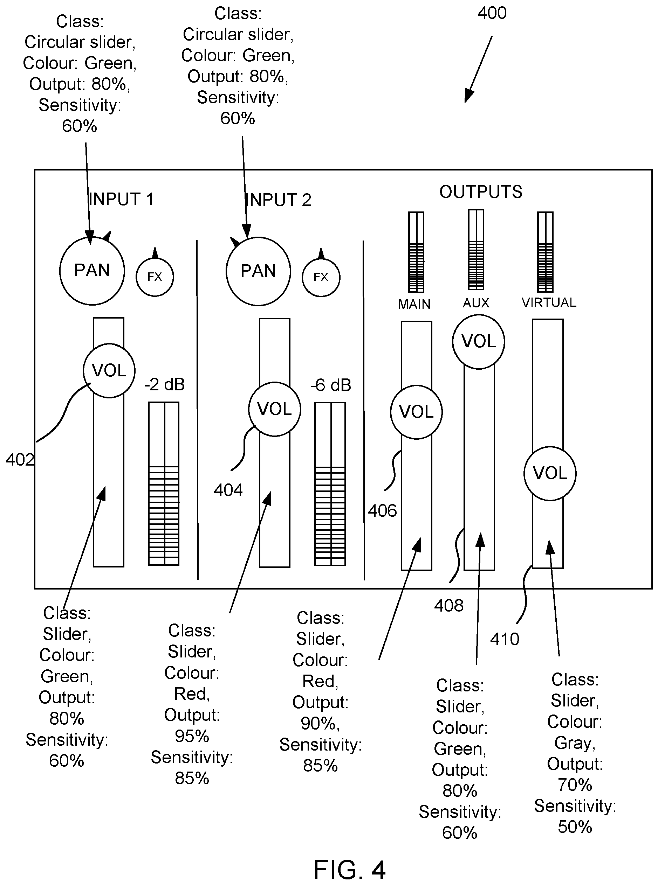

FIG. 4 illustrates a simplified example of a UI 400 of a digital audio mixer software. The example embodiment of the UI 400 comprises two input channels: Input 1 and input 2, and three output channels for main out, auxiliary output (AUX) and a virtual output that may be provided to, for example another software. Each channel has a slider to control the overall output volume of each channel, and they are configured to have different colours as illustrated in FIG. 4. For example, channel 1 slider 402 is configured to have a green colour, which is then configured to provide an 80% strength value and a 60% sensitivity value haptic feedback signal when it is dragged by a user. Conversely, input 2 channel slider 404 is configured to have a red colour and its haptic feedback signal is configured to have a 95% output strength value and an 85% sensitivity value. The output channels each have a different colour: Main output slider 406 is configured to have a red colour with output strength value of 90% and a sensitivity value of 60%. The auxiliary output slider 408 is configured as a green colour and is configured to have 80% output strength value and a sensitivity value of 60%. Finally, the virtual output channel slider 410 is configured to have a grey colour with an output strength value of 70% and a sensitivity value of 50%.

In other words, the haptics may be configured to match the main colour of the detected object (e.g., colour classification of slider classification). For example, red colour is configured to high strength and green colour is configured for low strength.

In addition, the UI 400 may be configured, for example, to output a 100% strength value signal when a red colour slider reaches maximum value.

The method 200 may be performed on the example UI 400 of FIG. 4, by for example, providing a snapshot of the UI when a touch (input) has been notified through an API of a haptic device module installed on the device running the example software of FIG. 4. In some cases, the first data may be captured by the haptic device module, or it may be captured by a separate module and then provided to the haptic device module. The rest of the method 200 may then be executed for each portion of the UI until each object in the UI has been properly classified and located in the snapshot.

When the at least one machine-learning model is a visual object detection model, and it has classified the objects, the sensing and haptic configuration for each slider may be determined by, for example, fetching an instruction from a memory. The sensing and haptic configuration may be pre-defined by the designer of the UI, or it may be a general library comprising sensing and haptic configurations for different objects.

Some embodiments of the method 200 may further comprise: the classification of the at least one object comprises a context value, the context value comprising an association between at least two classification categories; and determining the sensing and haptic configuration is at least partially based on the context value. The context value comprises data, how the output haptic signal should emulate a "sensation" or an "emotion" for example, by associating at least two categories and generating the context value between these categories. For example, categories of "ocean" and "night" will create a more subtle (less sensitive, less strength) output haptic signal than categories of "ocean" and "storm(y)".

Furthermore, the context value may comprise, for example, a time of day and how it is related to the category of an application. For example, during normal working hours (9:00-17:00), when pressing a work-related application, it requires less force (more sensitive) to activate the haptic feedback, and the provided haptic feedback signal is stronger when compared to for example, entertainment applications. In contrast, for example, during 20:00-22:00, entertainment applications may be configured for lower sensitivity and stronger haptic feedback.

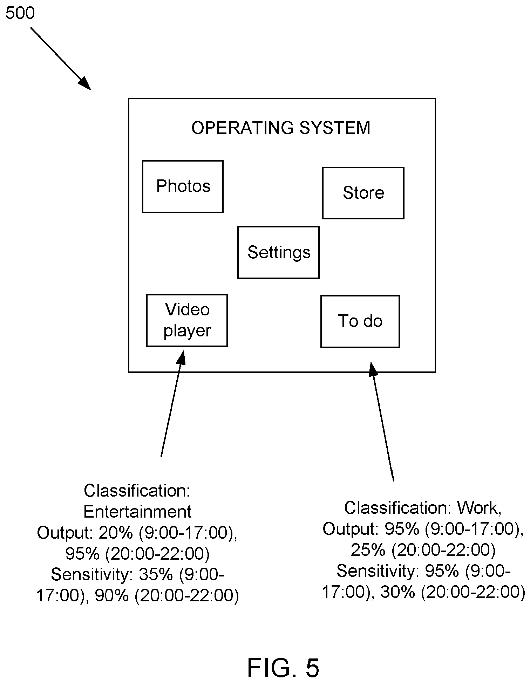

FIG. 5 illustrates an example of the above-described embodiment, wherein the first data comprises a portion of a snapshot from an operating system UI 500, and wherein the at least one machine-learning model has classified (and localized) objects in the first data. FIG. 5 illustrates the at least one machine-learning model having classified two objects: A video player, which is classified as entertainment and a To-Do application, which is classified as work. During working hours, the entertainment category is given less priority and then the priority will be increased during later in the evening (20:00-22:00). The opposite for the work category is configured: Prioritize haptic feedback strength during working hours and vice-versa. Higher prioritization comprises in this example higher sensitivity when initiating the haptic feedback and a stronger output signal. However, any variation of the sensitivity setting and the strength setting may be set by the designer(s) of the UI.

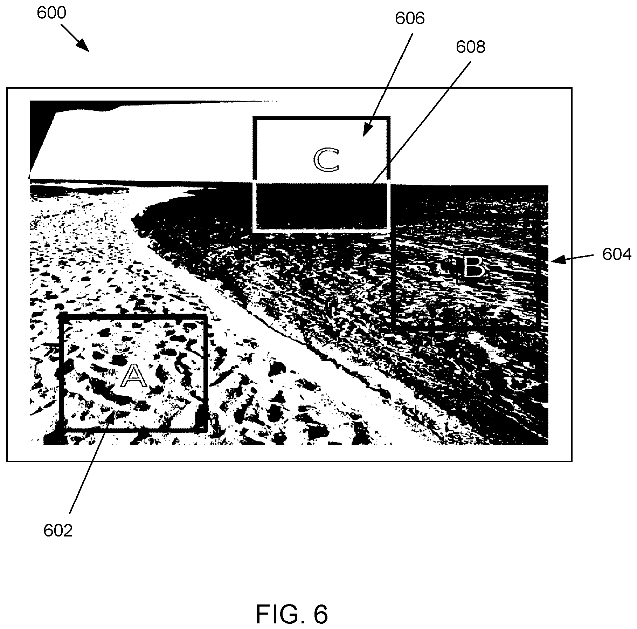

FIG. 6 illustrates an example, wherein the first data comprises a snapshot of a landscape view, the landscape view comprising a sandy beach, a sea water and a horizon line. In the example of FIG. 6, the at least one machine-learning model has classified three separate locations: A 602 - a beach (mostly warm colour), B 604 - sea water (mostly cold colour) and C 606 - horizon line with approximately 60% of sky and 40% of sea water. A disclosed embodiment enables sensing and haptic configurations based on for example, colour temperature. How, for example, the configuration may be configured such, that the haptic feedback, when pressed on A 602, is strong during summer (as sand is most likely hot during summertime). B 604 may be configured for example as having a lower frequency, continuous feedback signal indicating a wavelike movement. Or in some embodiments, like when utilizing soft haptics with thermal stimulation, a hot or a cold signal may be emitted.

In the case of C 606, as the horizon line area comprises different landscape categories, there may be a transition area 608, where the haptic response changes depending on the identified categories. Such example may be implemented by utilizing an edge detection algorithm using a deep neural network.

An example embodiment of the method 200 further comprises: First, based on providing the first data to the at least one machine-learning model, obtaining an edge detection information and secondly, the operation of determining a sensing and haptic configuration is at least partially based on the edge detection information.

The edge detection information may be obtained, for example, with a Sobel, Canny or Prewitt algorithms.

The edge detection information may be for example, a data matrix comprising colour or greyscale gradient information on the image or the like.

In some embodiments, when the at least one machine-learning model is a visual object detection model, it may be configured for edge detection, for example, using a convolutional neural network.

In some embodiments, the visual object detection model may be a holistically nested edge detector, HED.

The method 200 may further comprise: when the obtained edge detection information comprises pattern information on an object, the operation of determining a sensing and haptic configuration is at least partially based on the pattern information. The referenced "pattern information" may comprise, for example, a tile pattern or a wave pattern.

In some embodiments, the second data may comprise texture information (e.g., spatial arrangement of colour, intensities in the image), wherein the sensing and haptic configuration may be, for example, different for different colours and/or intensities in the texture.

In some embodiments, the pattern information may comprise the texture information. The structured pattern approach divides the image into primitive texels in some pattern.

In some embodiments, the classes for classification may comprise, for example, a rock, wherein the rock class (category) may have a data matrix comprising surface roughness data (edges) that configure a haptic feedback signal based on the surface roughness data (e.g., a very hard surface provides a more powerful haptic feedback signal than a very soft surface).

The haptic feedback type provided by the method 200 may be configured for different haptic feedback technologies such as force feedback, vibrotactile feedback, electrotactile (affect both the receptors and nerve endings by applying electrical impulses), ultrasonic tactile feedback and/or thermal feedback. This is all depended on whatever types of haptic feedback technologies a device performing the method 200 is equipped with and how the classification of objects is configured etc.

Other examples of haptic feedback is an audio feedback (a sound played by the haptic feedback device(s)) and or visual feedback with LED's for example.

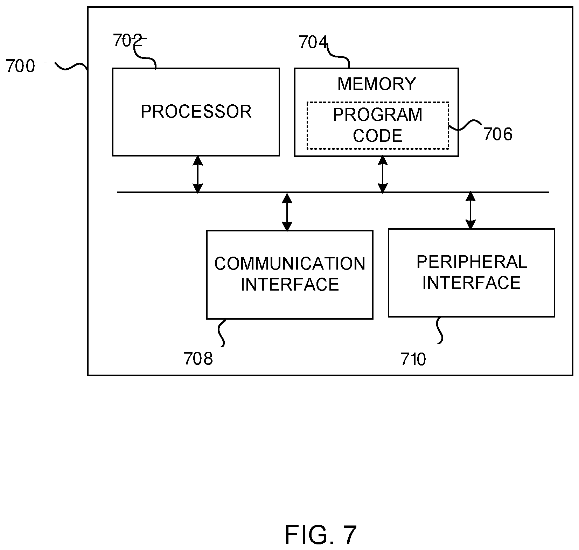

FIG. 7 illustrates a device 700 according to example embodiment. The device 700 may be configured to perform any of the methods 200 and the example embodiment described previously.

According to the **invention,** of a device 700 for determining a sensing and haptic configuration based on user interface, UI, properties using machine-learning, the device 700 comprises: at least one processor 702; at least one memory 704 including programmable logic 706; the at least one memory 704 and the programmable logic 706 are configured to, when executed by the at least one processor 702, to cause the device 700 to at least perform the method of the invention.

The 'first data' may be for example, as previously explained, a snapshot of a full UI, a portion of a snapshot of a full UI, an image, a sound data or the like - e.g., data that can be classified by a machine-learning model and is relevant to the user interface the device 700 operates.

In some embodiments of the disclosure, the sensing and haptic configuration may be for example, based on the intensity of the sound. E.g., a sound classifier or the like provides classifications on sound intensity and the sensing and haptic configuration is based on the sound intensity classification (e.g., gunshot vs a walking on a soft mattress etc.).

The device 700 may be, with the at least one memory 704 and programmable logic 706 configured to, when executed by the at least one processor 702, to operate an application programming interface, API, which may be used to obtain configuration instructions for different categories for the haptic feedback. Additionally, the API may be configured to obtain the position in the UI (e.g., the clicking position) and/or the image of the UI.

Or the device 700 may comprise a communication interface 708, wherein configuration information of the haptic feedback may be outside the device 700 (e.g., a main computing processor of a mobile phone). The communication interface 708 may be configured to obtain this configuration information. Furthermore, the communication interface 708 may be configured to obtain the snapshot of the UI.

Furthermore, the communication interface 708 may be configured to obtain the position in the UI (e.g., the clicking position). Additionally, the communication interface 708 may be configured to obtain the image of the UI and/or sensing and haptic configuration data for different classification categories for example.

The communication interface 708 may comprise an internal or external communication interface, or a radio interface. The device 700 may further comprise other components and/or functions such as for example a user interface (not shown) comprising at least one input device and/or at least one output device. The input device may take various forms such a keyboard, a touch screen, or one or more embedded control buttons. The output device may for example comprise a display, a speaker, or the like.

In some embodiments of the disclosure, different instances of the output haptic signal may be stored on the at least one memory 704 for example, in an array-of-vectors.

In some embodiments, the output haptic signal may be calculated mathematically (e.g., a sine wave, a saw wave or the like).

The device 700 may also comprise a peripheral interface 710, the peripheral interface 710 may comprise for example, the interface to communicate/drive a haptic feedback module (e.g., a haptic capable screen etc.).

In some embodiments, the peripheral interface 710 may be configured to provide the haptic feedback to LED's (e.g., a 5V on-off signal in variating patterns).

In an example embodiment of the device 700, the least one memory 704 and the programmable logic 706 are configured, with the at least one processor 702, to further cause the device 700 to operate the at least one machine-learning model.

The at least one machine-learning model may be a visual object detection model, which may be stored on, for example the at least one memory 704. The visual object detection model may be for example a deep neural network model such as convolutional neural network such as R-CNN or YOLO.

In some embodiments, the at least one machine-learning model may be an audio classifier.

It will be understood that the above description is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from scope of this specification.

Further examples of modification to embodiments may comprise, for example, utilizing the example methods 200 during a video game. E.g., a video game may be configured to work with the API of the device 700, and it is configured to provide a snapshot (or the portion of the snapshot) to the visual object detection model. The method 200 is then performed and then different output haptic signal is associated with different objects in the video game.

More examples of possible utilization of the method 200 or the device 700 in a video game may be, for example, recognizing different categories of objects in a touchscreen-based video game, and determining the sensing and haptic configuration based on these different objects.

The device 700 may be configured to perform or cause performance of any aspect of the methods described herein. Further, a computer program or a computer program product may comprise instructions for causing, when executed, the device 700 to perform any aspect of the methods described herein. Further, the device 700 may comprise means for performing any aspect of the method(s) described herein. According to an example embodiment, the means comprises at least one processor 702, and at least one memory 704 including program code 706, the at least one memory 704 and the program code 706 configured to, when executed by the at least one processor 702, cause performance of any aspect of the method(s). The means may comprise the structural elements described herein.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims.

As used in this application, the term 'circuitry' may refer to one or more or of the following: (1) hardware-only circuit implementations (such as for example implementations in only analog and/or digital circuitry) and (2) combinations of hardware circuits and software, for example: (i) a combination of analog and/or digital hardware circuit(s) with software/firmware and (ii) any portions of hardware processor(s) with software (e.g. digital signal processor(s)), software, and memory(ies) that work together to cause an apparatus to perform the various example embodiments and (3) hardware circuit(s) and or processor(s), such as a microprocessor(s) or a portion of a microprocessor(s), that requires software (e.g., firmware) for operation, but the software may not be present when it is not needed for operation.

Further examples of apparatuses, that may comprise the example device 700 and/or means to perform the disclosed methods, may be for example, at least one processing unit such as a microcontroller unit (MCU), an ARM-processor, an x86-processor, a Field-Programmable Gate-Array (FPGA), a co-processor, a controller, a digital signal processor (DSP), a processing circuitry with or without an accompanying DSP, an application specific integrated circuit (ASIC), a hardware accelerator, a special-purpose computer chip or the like.

The device 700 may comprise a haptic feedback device, such as a piezoelectric haptic feedback device matrix.

The device 700 and the haptic feedback device(s) installed in the device 700 may be configured for different haptic feedback technologies such as force feedback, vibrotactile feedback, electrotactile (affect both the receptors and nerve endings by applying electrical impulses), ultrasonic tactile feedback and/or thermal feedback.

Even further examples of apparatuses that may comprise the example device 700 and/or means to perform at least partially the disclosed methods may be for example, a graphical processing unit (GPU) or a neural network inference chip. For example, a trained neural network may be configured for a GPU, which acts as the at least one visual object detection model. The image of a UI is provided to the neural network in the GPU, and the GPU then provides the result(s) (classification and localization data for example) to a central processing unit, which executes the rest of the method.

The at least one memory 704 may comprise one or more volatile memory devices, one or more nonvolatile memory devices, and/or a combination thereof. For example, the memory may be embodied as magnetic storage devices (such as hard disk drives, magnetic tapes, etc.), optical magnetic storage devices, or semiconductor memories (such as mask ROM, PROM (programmable ROM), EPROM (erasable PROM), flash ROM, RAM (random access memory), etc.). Memory 704 is provided as an example of a (non-transitory) computer readable medium. The term "non-transitory," as used herein, is a limitation of the medium itself (i.e., tangible, not a signal) as opposed to a limitation on data storage persistency (e.g., RAM vs. ROM).

## Claims

1. A method (200) for determining a sensing and haptic configuration based on user interface, UI, properties using machine-learning, the method comprising:
obtaining a first data (201), the first data comprising information of a UI;
based on the first data, providing the first data to at least one machine-learning model (203);
based on the providing the first data to the at least one machine-learning model, obtaining a second data (204), the second data comprising at least one classification of at least one object and localization data of the at least one object;
obtaining a clicking position in the UI (210);
determining the sensing and haptic configuration based on the second data (205); and
based on the sensing and haptic configuration, providing a haptic feedback (208);
**characterised by**:
**obtaining, in the** second data, more than one localization data of more than one objects in an image of the UI; and
further determining:
if the clicking position in the UI is within range of a localization data of at least one object from the more than one objects in the image of the UI; and
if the clicking position in the UI is not within range of a localization data of another object;
**wherein** determining the sensing and haptic configuration is based on the further determining operations.

2. The method (200) of claim 1, wherein the haptic feedback is provided to a plurality of haptic feedback devices.

3. The method (200) of claims 1 or 2, wherein the localization data comprises alternatively: a bounding box of the at least one object, a segmentation data of the at least one object and at least one polygon of the at least one object.

4. The method (200) of any preceding claim,
wherein the at least one machine-learning model is alternatively: a cascade classifier, a deep neural network, a shape classifier, a shape segmentation model, a colour classifier and a sound classifier.

5. The method (200) of any preceding claim,
wherein the method further comprises:
obtaining at least one colour value based on providing the first data to the at least one machine-learning model; and
the operation of determining the sensing and haptic configuration is at least partially based on the at least one colour value.

6. The method (200) of any preceding claim, wherein the method further comprises:
the classification of the at least one object comprises a context value, the context value comprising an association between at least two classification categories; and
the operation of determining the sensing and haptic configuration is at least partially based on the context value.

7. The method (200) of any preceding claim, wherein the method further comprises:
based on providing the first data to the at least one machine-learning model, obtaining an edge detection information; and
the operation of determining the sensing and haptic configuration is at least partially based on the edge detection information.

8. The method (200) of claim 7, wherein:
when the obtained edge detection information comprises pattern information on an object, the operation of determining the sensing and haptic configuration is at least partially based on the pattern information.

9. A device (700) for determining a sensing and haptic configuration based on user interface, UI, properties using machine-learning, the device comprising:
at least one processor (702);
at least one memory (704) including programmable logic (706);
the at least one memory and the programmable logic are configured to, when executed by the at least one processor, cause the device to at least:
obtain a first data (201), the first data comprising information of a UI;
based on the first data, provide the first data to at least one machine-learning model (203);
based on the providing the first data to the at least one machine-learning model, obtain a second data (204), the second data comprising at least one classification of at least one object and localization data of the at least one object;
obtain a clicking position in the UI (210);
determine the sensing and haptic configuration based on the second data (205); and
based on the sensing and haptic configuration, provide a haptic feedback (208);
**characterised by** the at least one memory and the programmable logic being further configured to cause the device to:
obtain, in the second data, more than one localization data of more than one objects in an image of the UI; and
further determine:
if the clicking position in the UI is within range of a localization data of at least one object from the more than one objects in the image of the UI; and
if the clicking position in the UI is not within range of a localization data of another object;
wherein the sensing and haptic configuration is determined based on the further determining operations.

10. The device (700) according to claim 9, wherein the at least one memory (704) and the programmable logic (706) are configured to, when executed by the at least one processor (702), to further cause the device to operate the at least one machine-learning model.

## Patentansprüche

1. Verfahren (200) zum Bestimmen einer Sensor- und Haptikkonfiguration basierend auf Benutzerschnittstellen-. UI-, Eigenschaften unter Verwendung von maschinellem Lernen, wobei das Verfahren umfasst:
Erhalten erster Daten (201), wobei die ersten Daten Informationen einer UI umfassen;
basierend auf den ersten Daten, Bereitstellen der ersten Daten an mindestens ein maschinelles Lernmodell (203);
basierend auf dem Bereitstellen der ersten Daten an das mindestens eine maschinelle Lernmodell, Erhalten zweiter Daten (204), wobei die zweiten Daten mindestens eine Klassifizierung von Objekt- und/oder Lokalisierungsdaten des mindestens einen Objekts umfassen;
Erhalten einer Klickposition in der UI (210);
Bestimmen der Sensor- und Haptikkonfiguration basierend auf den zweiten Daten (205); und
basierend auf der Sensor- und Haptikkonfiguration, Bereitstellen einer haptischen Rückmeldung (208); **gekennzeichnet durch** Folgendes:
Erhalten, in den zweiten Daten, mehrerer Lokalisierungsdaten des mehr als einen Objekts in einer Abbildung der Ul; und
ferner Bestimmen:
ob die Klickposition in der UI innerhalb des Bereichs der Lokalisierungsdaten mindestens eines Objekts aus den mehreren Objekten in der Abbildung der UI ist; und
ob die Klickposition in der UI nicht innerhalb des Bereichs der Lokalisierungsdaten eines anderen Objekts ist;
wobei das Bestimmen der Sensor- und Haptikkonfiguration auf den weiteren Bestimmungsvorgängen basiert.

2. Verfahren (200) nach Anspruch 1, wobei die haptische Rückmeldung an eine Mehrzahl von haptischen Rückmeldungsvorrichtungen bereitgestellt wird.

3. Verfahren (200) nach Anspruch 1 oder 2, wobei die Lokalisierungsdaten alternativ Folgendes umfassen: eine Begrenzungsbox des mindestens einen Objekts, Segmentierungsdaten des mindestens einen Objekts und mindestens ein Polygon des mindestens einen Objekts.

4. Verfahren (200) nach einem der vorhergehenden Ansprüche, wobei das mindestens eine maschinelle Lernmodell alternativ eines der folgenden ist: ein Kaskadenklassifikator, ein tiefes neuronales Netzwerk, ein Formklassifikator, ein Formsegmentierungsmodell, ein Farbklassifikator und ein Geräuschklassifikator.

5. Verfahren (200) nach einem der vorhergehenden Ansprüche, wobei das Verfahren ferner umfasst:
Erhalten mindestens eines Farbwerts basierend auf dem Bereitstellen der ersten Daten an das mindestens eine maschinelle Lernmodell; und
wobei der Betrieb des Bestimmens der Sensor- und Haptikkonfiguration zumindest partiell auf dem mindestens einen Farbwert basiert.

6. Verfahren (200) nach einem der vorhergehenden Ansprüche, wobei das Verfahren ferner umfasst:
die Klassifizierung des mindestens einen Objekts umfasst einen Kontextwert, wobei der Kontextwert eine Assoziation zwischen mindestens zwei Klassifizierungskategorien umfasst; und
der Betrieb des Bestimmens der Sensor- und Haptikkonfiguration basiert zumindest partiell auf dem Kontextwert.

7. Verfahren (200) nach einem der vorhergehenden Ansprüche, wobei das Verfahren ferner umfasst:
basierend auf dem Bereitstellen der ersten Daten an das mindestens eine maschinelle Lernmodell, Erhalten einer Kantenerkennungsinformation; und
wobei der Betrieb des Bestimmens der Sensor- und Haptikkonfiguration zumindest partiell auf der Kantenerkennungsinformation basiert.

8. Verfahren (200) nach Anspruch 7, wobei:
wenn die erhaltenen Kantenerkennungsinformationen Musterinformationen zu einem Objekt umfassen, der Betrieb des Bestimmens der Sensor- und Haptikkonfiguration zumindest partiell auf den Musterinformationen basiert.

9. Vorrichtung (700) zum Bestimmen einer Sensor- und Haptikkonfiguration basierend auf Benutzerschnittstellen-, UI-, Eigenschaften unter Verwendung von maschinellem Lernen, wobei die Vorrichtung umfasst:
mindestens einen Prozessor (702);
mindestens einen Speicher (704), der eine programmierbare Logik (706) umfasst;
wobei der mindestens eine Speicher und die programmierbare Logik so konfiguriert sind, dass sie, wenn sie durch den mindestens einen Prozessor ausgeführt werden, die Vorrichtung mindestens zu folgendem veranlassen:
Erhalten erster Daten (201), wobei die ersten Daten Informationen einer UI umfassen;
basierend auf den ersten Daten, Bereitstellen der ersten Daten an mindestens ein maschinelles Lernmodell (203);
basierend auf dem Bereitstellen der ersten Daten an das mindestens eine maschinelle Lernmodell, Erhalten zweiter Daten (204), wobei die zweiten Daten mindestens eine Klassifizierung von Objekt- und/oder Lokalisierungsdaten des mindestens einen Objekts umfassen;
Erhalten einer Klickposition in der UI (210);
Bestimmen der Sensor- und Haptikkonfiguration basierend auf den zweiten Daten (205); und
basierend auf der Sensor- und Haptikkonfiguration, Bereitstellen einer haptischen Rückmeldung (208); **dadurch gekennzeichnet, dass** der mindestens eine Speicher und die programmierbare Logik ferner dazu konfiguriert sind, die Vorrichtung zu Folgendem zu veranlassen:
Erhalten, in den zweiten Daten, mehrerer Lokalisierungsdaten des mehr als einen Objekts in einer Abbildung der Ul; und
ferner Bestimmen:
ob die Klickposition in der UI innerhalb des Bereichs der Lokalisierungsdaten mindestens eines Objekts aus den mehreren Objekten in der Abbildung der UI ist; und
ob die Klickposition in der UI nicht innerhalb des Bereichs der Lokalisierungsdaten eines anderen Objekts ist;
wobei das Bestimmen der Sensor- und Haptikkonfiguration auf den weiteren Bestimmungsvorgängen basiert.

10. Vorrichtung (700) nach Anspruch 9, wobei der mindestens eine Speicher (704) und die programmierbare Logik (706) dazu konfiguriert sind, dass sie, wenn sie von dem mindestens einen Prozessor (702) ausgeführt werden, die Vorrichtung ferner dazu veranlassen, das mindestens eine maschinelle Lernmodell zu betreiben.

## Revendications

1. Procédé (200) pour déterminer une configuration de détection et haptique sur la base de propriétés d'interface utilisateur, UI, en utilisant un apprentissage automatique, le procédé comprenant :
l'obtention de premières données (201), les premières données comprenant des informations d'une UI ;
sur la base des premières données, la fourniture des premières données à au moins un modèle d'apprentissage automatique (203) ;
sur la base de la fourniture des premières données à l'au moins un modèle d'apprentissage automatique, l'obtention de secondes données (204), les secondes données comprenant au moins une classification d'au moins un objet et des données de localisation de l'au moins un objet ;
l'obtention d'une position de clic dans l'UI (210) ;
la détermination de la configuration de détection et haptique sur la base des secondes données (205) ; et
sur la base de la configuration de détection et haptique, la fourniture d'une rétroaction haptique (208) ;
**caractérisé par :**
l'obtention, dans les secondes données, de plus d'un élément de données de localisation de plus d'un objet dans une image de l'UI ; et
le fait de déterminer additionnellement :
si la position de clic dans l'UI s'inscrit dans la plage d'un élément de données de localisation d'au moins un objet parmi les plus d'un objet dans l'image de l'UI ; et
si la position de clic dans l'UI ne s'inscrit pas dans la plage de données de localisation d'un autre objet ;
dans lequel la détermination de la configuration de détection et haptique est basée sur les opérations additionnelles de détermination.

2. Procédé (200) selon la revendication 1,
dans lequel la rétroaction haptique est fournie à une pluralité de dispositifs de rétroaction haptique.

3. Procédé (200) selon les revendications 1 ou 2, dans lequel
les données de localisation comprennent en variante : une boîte de délimitation de l'au moins un objet, des données de segmentation de l'au moins un objet et au moins un polygone de l'au moins un objet.

4. Procédé (200) selon l'une quelconque des revendications précédentes,
dans lequel l'au moins un modèle d'apprentissage automatique est en variante : un classificateur en cascade, un réseau neuronal profond, un classificateur de forme, un modèle de segmentation de forme, un classificateur de couleur et un classificateur sonore.

5. Procédé (200) selon l'une quelconque des revendications précédentes,
dans lequel le procédé comprend en outre :
l'obtention d'au moins une valeur de couleur sur la base de la fourniture des premières données à l'au moins un modèle d'apprentissage automatique ; et
l'opération de détermination de la configuration de détection et haptique est au moins partiellement basée sur l'au moins une valeur de couleur.

6. Procédé (200) selon l'une quelconque des revendications précédentes,
dans lequel le procédé comprend en outre :
la classification de l'au moins un objet comprend une valeur de contexte, la valeur de contexte comprenant une association entre au moins deux catégories de classification ; et
l'opération de détermination de la configuration de détection et haptique est au moins partiellement basée sur la valeur de contexte.

7. Procédé (200) selon l'une quelconque des revendications précédentes,
dans lequel le procédé comprend en outre :
sur la base de la fourniture des premières données à l'au moins un modèle d'apprentissage automatique, l'obtention d'informations de détection de bord ; et
l'opération de détermination de la configuration de détection et haptique est au moins partiellement basée sur les informations de détection de bord.

8. Procédé (200) selon la revendication 7, dans lequel :
lorsque les informations de détection de bord obtenues comprennent des informations de motif sur un objet, l'opération de détermination de la configuration de détection et haptique est au moins partiellement basée sur les informations de motif.

9. Dispositif (700) pour déterminer une configuration de détection et haptique sur la base de propriétés d'interface utilisateur, UI, en utilisant un apprentissage automatique, le dispositif comprenant :
au moins un processeur (702) ;
au moins une mémoire (704) incluant une logique programmable (706) ;
l'au moins une mémoire et la logique programmable sont configurées pour, lorsqu'elles sont exécutées par l'au moins un processeur, amener le dispositif au moins à :
obtenir des premières données (201), les premières données comprenant des informations d'une UI ;
sur la base des premières données, fournir les premières données à au moins un modèle d'apprentissage automatique (203) ;
sur la base de la fourniture des premières données à l'au moins un modèle d'apprentissage automatique, obtenir des secondes données (204), les secondes données comprenant au moins une classification d'au moins un objet et des données de localisation de l'au moins un objet ;
obtenir une position de clic dans l'UI (210) ;
déterminer la configuration de détection et haptique sur la base des secondes données (205) ; et
sur la base de la configuration de détection et haptique, fournir une rétroaction haptique (208) ;
**caractérisé en ce que** l'au moins une mémoire et la logique programmable sont en outre configurées pour amener le dispositif à :
obtenir, dans les secondes données, plus d'un élément de données de localisation de plus d'un objet dans une image de l'UI ; et
déterminer additionnellement :
si la position de clic dans l'UI s'inscrit dans la plage d'un élément de données de localisation d'au moins un objet parmi les plus d'un objet dans l'image de l'UI ; et
si la position de clic dans l'UI ne s'inscrit pas dans la plage de données de localisation d'un autre objet ;
dans lequel la configuration de détection et haptique est déterminée sur la base des opérations additionnelles de détermination.

10. Dispositif (700) selon la revendication 9,
dans lequel l'au moins une mémoire (704) et la logique programmable (706) sont configurées pour, lorsqu'elles sont exécutées par l'au moins un processeur (702), amener en outre le dispositif à faire fonctionner l'au moins un modèle d'apprentissage automatique.
